# EUROPÄISCHE PATENTSCHRIFT

(11) **EP 2 260 787 B1**
(45) Veröffentlichungstag und Bekanntmachung des Hinweises auf die Patenterteilung: **12.08.2015**
(21) Anmeldenummer: 10006136.5
(22) Anmeldetag: 14.06.2010
(51) Int. Cl.: A61C 3/02

(54) **Dentalbohrer**
Dental drill
Fraise dentaire

(30) Priorität: 12.06.2009 DE 102009024651
(43) Veröffentlichungstag der Anmeldung: 15.12.2010
(73) Patentinhaber: Gebr. Brasseler GmbH & Co. KG, D-32657 Lemgo (DE)
(72) Erfinder: Danger, Karl-Heinz, 32758 Detmold (DE); Jakubzik, Mark, 32657 Lemgo (DE)
(74) Vertreter: Hoefer & Partner Patentanwälte mbB

(56) Entgegenhaltungen:
- EP-A1- 1 849 429
- WO-A2-2008/061711
- DE-B3-102008 010 049
- DE-C- 677 703
- DE-C1- 19 826 276
- DE-U1- 8 806 115

## Beschreibung

Die Erfindung bezieht sich auf einen Dentalbohrer mit einem Schaft und einem Kopf.

Dentalbohrer werden insbesondere verwendet, um kariöses Dentin zu entfernen. Hierzu sind aus dem Stand der Technik unterschiedlichste Ausgestaltungsformen derartiger Dentalbohrer vorbekannt, wie z.B. DE 677703 oder DE 10 2008 010 049 offenbart.

Bei der Kavitätenpräparation von kariösem Material ist es erforderlich, das kariöse Material vollständig zu entfernen, andererseits den nicht-kariösen Teil des Zahnes zu schonen, um eine zusätzliche Schädigung durch Entnahme von zu viel Material zu vermeiden. Dabei ist es insbesondere bei tiefen Kavitäten von besonderer Wichtigkeit, eine Eröffnung der Pulpa zu vermeiden.

Ein weiterer Aspekt bei derartigen Dentalbohrern liegt darin, thermische Schädigungen bei der Präparation des Zahnes des Patienten zu vermeiden.

Der Erfindung liegt die Aufgabe zugrunde, einen Dentalbohrer der eingangs genannten Art zu schaffen, welcher insbesondere zum Entfernen von kariösem Dentin einsetzbar ist, welcher einfach und kostengünstig herstellbar ist und die Nachteile des Standes der Technik vermeidet.

Erfindungsgemäß wird die Aufgabe durch die Merkmalskombination des Anspruchs 1 gelöst, die Unteransprüche zeigen weitere vorteilhafte Ausgestaltungen der Erfindung.

Der erfindungsgemäße Dentalbohrer weist somit einen mittels eines Halses an einem Schaft befestigten Kopf auf. Der Schaft ist in üblicher Weise ausgebildet, so dass er beispielsweise in ein Winkelstück oder einen sonstigen Antriebe einspannbar ist.

Der Kopf des Schaftes ist so ausgebildet, dass er ein plattenförmiges Schneidelement umfasst, dessen Mittelebene in der Drehachse des Dentalbohrers liegt. Das Schneidelement steht somit hinsichtlich seiner plattenförmigen Grundform mittig und hochkant auf dem Hals des Dentalbohrers.

Das plattenförmige Schneidelement umfasst an seinem distalen Ende eine Übergangsschneide. Diese geht jeweils in eine Hauptschneide über, wobei die beiden Hauptschneiden an entgegengesetzten Seiten des plattenförmigen Schneidelements angeordnet sind. Es ergeben sich somit bei Drehung des Dentalbohrers zwei Schneiden, welche durch die Kanten des Schneidelements gebildet werden. Das Schneidelement selbst ist bevorzugterweise abgerundet, rund oder birnenförmig ausgebildet, so dass bei einer Rotation des Dentalbohrers der Kopf über seinen ganzen Umfang schneidet.

Weiterhin ist erfindungsgemäß vorgesehen, dass der Kopf mittels eines Halses mit dem Schaft verbunden ist, wobei der Hals einen geringeren Querschnitt aufweist, als der Schaft. Durch die Ausgestaltung des Halses ergibt sich somit im Übergang zwischen dem Schaft und dem Kopf ein Teilbereich mit einem geringeren Querschnitt, welcher erfindungsgemäß die Möglichkeit einer elastischen Verformbarkeit eröffnet.

Gemäß Erfindung ist vorgesehen, dass der Hals flexibel ausgebildet ist und sich bei Überschreiten einer vorgegebenen, auf den Kopf aufgebrachten Kraft verformt. Durch die Verformbarkeit des Halses wird somit die bei der Kavitätenpräparation durch einen Zahnarzt aufzubringende Kraft begrenzt. Diese Kraft ist in optimaler Weise so begrenzt, dass sie ausreichend ist, um mit den Schneiden des Kopfes kariöses Dentin abzutragen. Da dieses weicher ist, als das gesunde Dentin, kann somit, bedingt durch die Verformbarkeit des Halses, keine so große Kraft aufgebracht werden, um gesundes Dentin abzutragen.

Es versteht sich, dass die Verformbarkeit des Halses insbesondere in seitlicher Richtung, bezogen auf eine Seitenansicht des Dentalbohrers, besonders wirksam ist.

Um auch bei einer rein axialen Vorschubbewegung des Dentalbohrers eine Schädigung gesunden Dentins durch eine zu große Kraftaufbringung zu vermeiden, ist erfindungsgemäß weiterhin vorgesehen, dass zumindest der Kopf aus einem Kunststoffmaterial gefertigt ist, welches eine Härte zwischen 60 und 250 Knoop aufweist. Das Kunststoffmaterial hat somit eine Härte, die geeignet ist, das weichere, kariöse Dentin abzutragen. Nicht-kariöses Dentin ist jedoch weitaus härter, als kariöses Dentin und wird mit einem Kunststoffmaterial in der angegebenen Knoop-Härte nicht abgetragen.

Der erfindungsgemäße Dentalbohrer weist somit den Vorteil auf, dass selbst bei Aufbringen einer sehr großen Kraft kein oder nur ein unwesentlicher Abtrag von gesundem Dentin erfolgt.

In besonders günstiger. Ausgestaltung der Erfindung ist vorgesehen, dass sich der Hals vom Schaft zum Kopf im Wesentlichen konisch verjüngt. Somit ist der Bereich des Halses mit dem geringsten Querschnitt benachbart zu dem Kopf angeordnet, um ein Ausweichen des Kopfes bei einer zu großen Kraftaufbringung zu ermöglichen.

In besonders günstiger Ausgestaltung der Erfindung ist vorgesehen, dass zu dem die erste und die zweite Hauptschneide bildenden ersten plattenförmigen Schneidelement ein sekundäres plattenförmiges zweites Schneidelement angeordnet ist. Dieses dient zum einen der Abstützung des Kopfes bei einer Rotation des Dentalbohrers und kann in besonders günstiger Ausgestaltung mit Sekundärschneiden versehen sein. Besonders günstig ist es dabei, wenn das zweite, sekundäre plattenförmige Schneidelement zum distalen Ende des Kopfes zurückversetzt ist. Somit erfolgt der eigentliche Präparationsvorgang durch die Schneiden des ersten Schneidelements, nämlich durch die Übergangsschneide am distalen Ende sowie die sich hieran anschließenden Hauptschneiden.

Um einen gleichmäßigen Lauf des erfindungsgemäßen Dentalbohrers bei den in üblicher Weise verwendeten Drehzahlen sicherzustellen, ist es günstig, wenn die Hauptschneiden und die Sekundärschneiden zumindest am mittleren Bereich des Kopfes bei einer Rotation des Dentalbohrers auf einer gemeinsamen räumlichen Einhüllenden angeordnet sind. Sie bilden somit eine räumliche Hüllkurve.

Durch die Ausgestaltung des erfindungsgemäßen Dentalbohrers mit dem plattenförmigen Schneidelement ergeben sich sehr große Spanräume, um das abgetragene Material aufzunehmen und abzutransportieren. Auch wird hierdurch die Kühlung verbessert, so dass sich insbesondere bei den relativ niedrigen Drehzahlen (< 5000 min⁻¹) keine Schädigung oder Zerstörung durch übermäßige Wärmeentwicklung ergibt.

Besonders vorteilhaft ist es, wenn zumindest der Kopf des erfindungsgemäßen Dentalbohrers aus einem Kunststoffmaterial gefertigt ist, welches aus einem der folgenden Materialien besteht:
Polyoxymethylen (POM),
Polycarbonat (PC),
Polyetherimid (PEI),
Polyethersulfon (PES),
Polysulfon (PSU),
Polyamidimid (PAI),
Polyphenylensulfon (PPSU)
oder Polyetheretherketon (PEEK).

In besonders günstiger Ausgestaltung der Erfindung ist vorgesehen, das Kunststoffmaterial mit Fasern zu verstärken.

Der erfindungsgemäße Dentalbohrer ist bevorzugterweise einstückig und aus dem gleichen Kunststoffmaterial hergestellt.

Im Folgenden wird die Erfindung anhand eines Ausführungsbeispiels in Verbindung mit der Zeichnung beschrieben. Dabei zeigt:
- Fig. 1: eine perspektivische Ansicht eines Ausführungsbeispiels eines erfindungsgemäßen Dentalbohrers,
- Fig. 2: eine Seitenansicht, in vereinfachter Darstellung,
- Fig. 3: eine vereinfachte Draufsicht auf den Bohrer gemäß Fig. 1 oder 2,

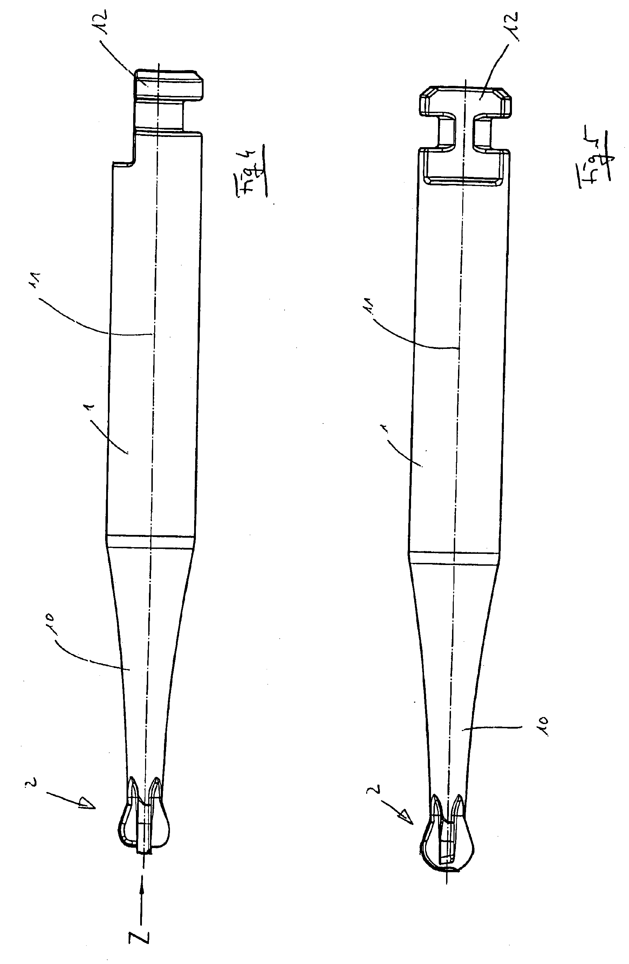

- Fig. 4: eine Seitenansicht des erfindungsgemäßen Bohrers,
- Fig. 5: eine um 90° gedrehte Seitenansicht, analog Fig. 4,
- Fig. 6: eine stirnseitige Ansicht, analog Fig. 3, und
- Fig. 7: eine perspektivische Ansicht des erfindungsgemäßen Dentalbohrers.

Der erfindungsgemäße Dentalbohrer umfasst einen Schaft 1, der an seinem einen Endbereich mit einem üblicherweise ausgebildeten Einspannbereich versehen ist. Der Schaft 1 ist bevorzugt zylindrisch ausgebildet und geht in einen sich konisch verjüngenden Hals 10 über. An den Hals 10 schließt sich ein Kopf 2 an.

Erfindungsgemäß umfasst der Kopf 2 ein plattenförmiges Schneidelement 3, in dessen Mittelebene (nicht dargestellt) eine Mittelachse 11 (Drehachse) des Dentalbohrers angeordnet ist. Das plattenförmige Schneidelement 3 ist abgerundet (teilkugelförmig, birnenförmig oder in ähnlicher Weise ausgestaltet), so wie sich dies aus den Figuren ergibt.

Am distalen, vorderen Ende des plattenförmigen Schneidelements 3 ist eine Übergangsschneide 4 ausgebildet, welche in eine erste Hauptschneide 5 und eine zweite Hauptschneide 6 übergeht.

Wie sich aus den Darstellungen des Ausführungsbeispiels ergibt, ist das plattenförmige Schneidelement 3 in der Seitenansicht abgerundet, es weist einen Durchmesser auf, der für die Kavitätenpräparation optimiert ist.

Senkrecht zu dem plattenförmigen Schneidelement 3 ist ein sekundäres plattenförmiges Schneidelement 7 angeordnet. Dieses ist in Axialrichtung vom distalen Ende des Dentalbohrers zurückversetzt und weist eine erste Sekundärschneide 8 sowie eine zweite Sekundärschneide 9 auf.

Die beiden plattenförmigen Schneidelemente 3, 7 sind so ausgebildet und angeordnet, dass sich ein großer Spanraum ergibt.

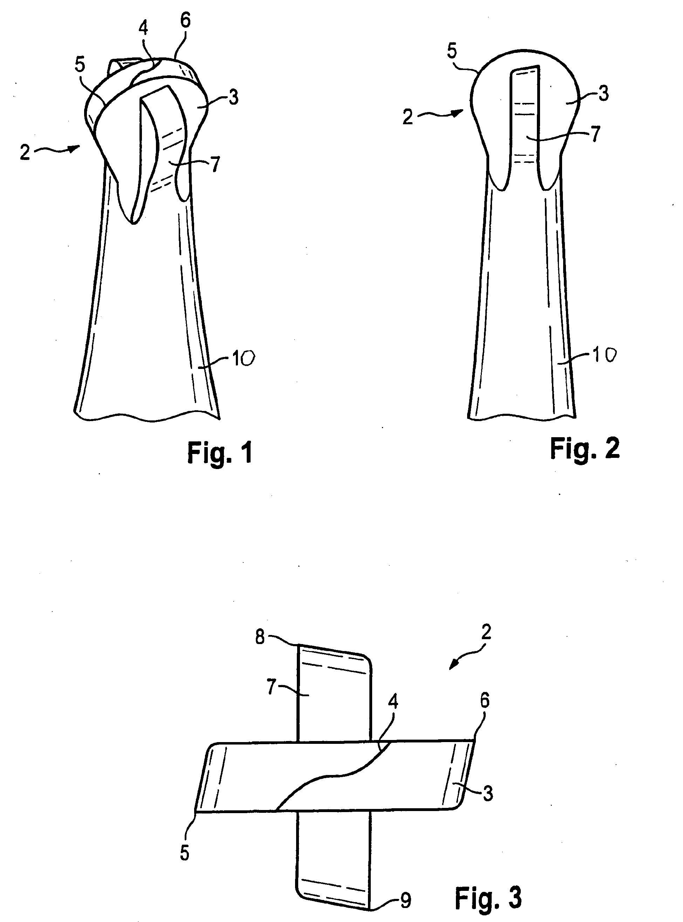

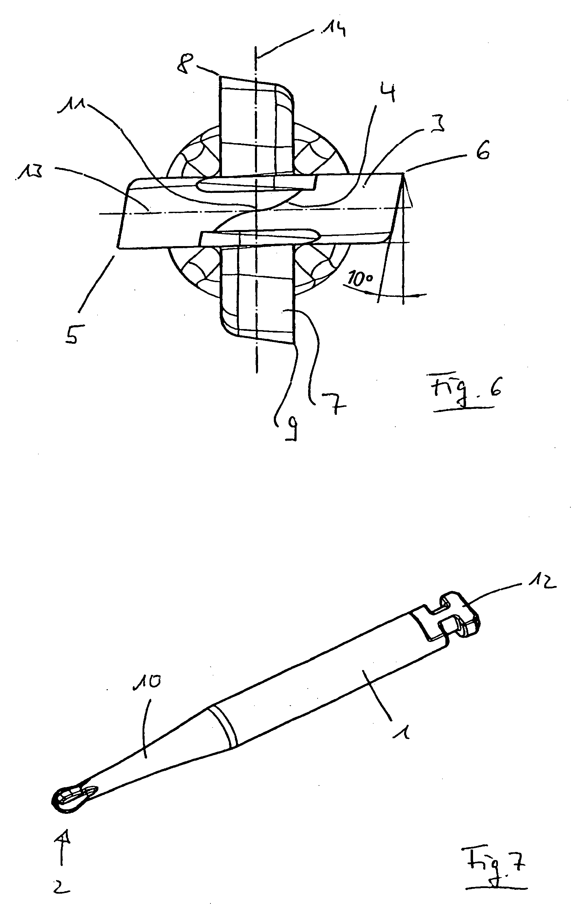

Aus den Darstellungen, insbesondere Fig. 3 und 6, ist ersichtlich, dass die Mittelebene 13 des ersten Schneidelements 3 und die Mittelebene 14 des zweiten Schneidelements 7 in einem rechten Winkel zueinander angeordnet sind.

Die Schneidengeometrie des ersten plattenförmigen Schneidelements 3 und des sekundären plattenförmigen Schneidelements 7 ist bevorzugterweise gleich gewählt, es ist jedoch auch möglich, unterschiedliche Schneidengeometrien vorzusehen. In Fig. 6 ist beispielsweise dargestellt, dass sich an der ersten Hauptschneide 5 und an der zweiten Hauptschneide 6 ein Freiwinkel von 10° ergibt. Es liegt somit ein Keilwinkel von 80° vor, der Spanwinkel beträgt 0°. Es versteht sich, dass die Schneidgeometrien den jeweiligen Anforderungen angepasst werden können.

Erfindungsgemäß ist es weiterhin möglich, dass die Schneiden 5, 6, 8 und 9 an dem Außenumfang des jeweiligen Schneidelements 3 bzw. 7 mit einem Rechtsdrall oder einem Linksdrall versehen sein können.

Der Kopf 2 des erfindungsgemäßen Dentalbohrers kann beispielsweise einen Durchmesser von 0,6 mm bis 3.1 mm haben. Die Breite der plattenförmigen Schneidelemente 3 bzw. 7 kann beispielsweise 0.1 mm bis 0.6 mm betragen.

### Bezugszeichenliste

- 1: Schaft
- 2: Kopf
- 3: Plattenförmiges Schneidelement
- 4: Übergangsschneide
- 5: Erste Hauptschneide
- 6: Zweite Hauptschneide
- 7: Sekundäres plattenförmiges Schneidelement
- 8: Erste Sekundärschneide
- 9: Zweite Sekundärschneide
- 10: Hals
- 11: Mittelachse/Drehachse
- 12: Einspannbereich
- 13: Mittelebene des Schneidelements 3
- 14: Mittelebene des Schneidelements 7

## Patentansprüche

1. Dentalbohrer
mit einem an einem Schaft (1) befestigten Kopf (2),
welcher ein plattenförmiges Schneidelement (3) aufweist,
welches mit seiner Mittelebene (13) in einer die Drehachse (11) des Dentalbohrers umfassenden Ebene angeordnet ist,
wobei das plattenförmige Schneidelement (3) am distalen Ende eine Übergangsschneide (4) aufweist,
sowie jeweils eine sich an die Übergangsschneide (4) anschließende erste (5) und zweite (6) Hauptschneide,
wobei die Hauptschneiden (5, 6) auf entgegengesetzten Seiten des plattenförmigen Schneidelements (3) angeordnet sind,
wobei der Kopf (2) mittels eines Halses (10) mit dem Schaft (1) verbunden ist, wobei der Hals (10) einen geringeren Querschnitt aufweist, als der Schaft (1), und flexibel ausgebildet ist, und wobei zumindest der Kopf (2) aus einem Kunststoffmaterial gefertigt ist, welches eine Härte zwischen 60 und 250 Knoop aufweist.

2. Dentalbohrer nach Anspruch 1, **dadurch gekennzeichnet, dass** der Hals (10) sich vom Schaft (1) zum Kopf (2) im Wesentlichen konisch verjüngend ausgebildet ist.

3. Dentalbohrer nach einem der Ansprüche 1 oder 2, **dadurch gekennzeichnet, dass** in einem Winkel zum plattenförmigen Schneidelement (3) in einer die Drehachse (11) umfassenden Ebene (14) zumindest ein sekundäres plattenförmiges Schneidelement (7) angeordnet ist, wobei bevorzugt das sekundäre plattenförmige Schneidelement (7) zum distalen Ende des Kopfes (2) zurückversetzt ist.

4. Dentalbohrer nach Anspruch 3, **dadurch gekennzeichnet, dass** an den entgegengesetzten Seiten des sekundären plattenförmigen Schneidelements (7) jeweils eine Sekundärschneide (8, 9) angeordnet ist, wobei bevorzugt die Hauptschneiden (5, 6) und die Sekundärschneiden (8, 9) zumindest am mittleren Bereich des Kopfes (2) bei Rotation des Dentalbohrers um seine Drehachse (11) auf einer gemeinsamen räumlichen Einhüllenden angeordnet sind.

5. Dentalbohrer nach einem der Ansprüche 1 bis 4, **dadurch gekennzeichnet, dass** zumindest der Kopf aus Polyoxymethylen (POM), Polycarbonat (PC), Polyetherimid (PEI), Polyethersulfon (PES), Polysulfon (PSU), Polyamidimid (PAI), Polyphenylensulfon (PPSU), oder Polyetheretherketon (PEEK) gefertigt ist.

6. Dentalbohrer nach einem der Ansprüche 1 bis 5, **dadurch gekennzeichnet, dass** das Kunststoffmaterial mit Fasern verstärkt ist.

7. Dentalbohrer nach einem der Ansprüche 1 bis 6, **dadurch gekennzeichnet, dass** der Kopf (2) eine runde Konturform oder eine birnenförmige Konturform aufweist.

8. Dentalbohrer nach einem der Ansprüche 1 bis 7, **dadurch gekennzeichnet, dass** der gesamte Dentalbohrer einstückig und aus gleichem Material hergestellt ist.

## Claims

1. A dental drill
having a head (2) mounted at a shank (1),
which comprises a plate-shaped cutting element (3)
which is arranged with the central plane (13) thereof in a plane encompassing the rotation axis (11) of the dental drill,
wherein the plate-shaped cutting element (3) comprises a transition blade (4) at the distal end and
a first (5) and second (6) main blade each adjoining the transition blade (4),
wherein the main blades (5, 6) are arranged at opposite sides of the plate-shaped cutting element (3),
wherein the head (2) is connected by means of a neck (10) to the shank (1),
wherein the neck (10) has a smaller cross-section than the shank (1) and is made flexible, and wherein at least the head (2) is made from a plastic material which has a hardness between 60 and 250 knoops.

2. The dental drill according to claim 1, **characterized in that** the neck (10) is configured to be substantially conically tapering from the shaft (1) to the head (2).

3. The dental drill according to any one of claims 1 or 2, **characterized in that** at least one secondary plate-shaped cutting element (7) is arranged at an angle relative to the plate-shaped cutting element (3) in a plane (14) encompassing the rotation axis (11), the secondary plate-shaped cutting element (7) being preferably set back relative to the distal end of the head (2).

4. The dental drill according to claim 3, **characterized in that** a respective secondary blade (8, 9) is arranged at the opposite sides of the secondary plate-shaped cutting element (7), the main blades (5, 6) and the secondary blades (8, 9) being preferably arranged on a joint spatial envelope at least on the central portion of the head (2) upon rotation of the dental drill about the rotation axis (11) thereof.

5. The dental drill according to any one of claims 1 to 4, **characterized in that** at least the head is made from polyoxymethylene (POM), polycarbonate (PC), polyetherimide (PEI), polyethersulfone (PES), polysulfone (PSU), polyamide imide (PAI), polyphenylsulfone (PPSU) or polyetheretherketone (PEEK).

6. The dental drill according to any one of claims 1 to 5, **characterized in that** the plastic material is reinforced with fibers.

7. The dental drill according to any one of claims 1 to 6, **characterized in that** the head (2) has a round contour shape or a pear-shaped contour shape.

8. The dental drill according to any one of claims 1 to 7, **characterized in that** the total dental drill is made in one piece and from the same material.

## Revendications

1. Fraise dentaire
comprenant une tête (2) fixée au niveau d'une tige (1),
laquelle tête présente un élément à lames (3) en forme de plaque,
lequel est disposé, par son plan central (13), dans un plan englobant l'axe de rotation (11) de la fraise dentaire,
sachant que l'élément à lames (3) en forme de plaque présente, au niveau de l'extrémité distale, une lame de passage (4),
ainsi que respectivement une première lame principale (5) et une deuxième lame principale (6) se raccordant à la lame de passage (4),
sachant que les lames principales (5, 6) sont disposées sur des côtés opposés de l'élément à lames (3) en forme de plaque,
sachant que la tête (2) est reliée à la tige (1) au moyen d'un col (10), sachant que le col (10) présente une section transversale plus petite que celle de la tige (1) et est réalisé de manière flexible, et sachant qu'au moins la tête (2) est fabriquée à partir d'un matériau plastique, qui présente une dureté comprise entre 60 et 250 Knoop.

2. Fraise dentaire selon la revendication 1, **caractérisée en ce que** le col (10) est réalisé de manière à se rétrécir essentiellement de manière conique en partant de la tige (1) vers la tête (2).

3. Fraise dentaire selon l'une quelconque des revendications 1 ou 2, **caractérisée en ce qu'**au moins un élément à lames (7) secondaire en forme de plaque est disposé selon un angle donné par rapport à l'élément à lames (3) en forme de plaque dans un plan (14) englobant l'axe de rotation (11), sachant que de manière préférée l'élément à lames (7) secondaire en forme de plaque est en retrait par rapport à l'extrémité distale de la tête (2).

4. Fraise dentaire selon la revendication 3, **caractérisée en ce qu'**une lame secondaire (8, 9) est respectivement disposée au niveau des côtés opposés de l'élément à lames (7) secondaire en forme de plaque, sachant que de manière préférée les lames principales (5, 6) et les lames secondaires (8, 9) sont disposées au moins au niveau de la zone centrale de la tête (2) lors de la rotation de la fraise dentaire autour de son axe de rotation (11) sur une enveloppe commune spatiale.

5. Fraise dentaire selon l'une quelconque des revendications 1 à 4, **caractérisée en ce qu'**au moins la tête est fabriquée à partir d'un polyoxyméthylène (POM), d'un polycarbonate (PC), d'un polyétherimide (PEI), d'un polyéthersulfone (PES), d'un polysulfone (PSU), d'un polyamidimide (PAI), d'un polyphénylènesulfone (PPSU) ou d'un polyétheréthercétone (PEEK).

6. Fraise dentaire selon l'une quelconque des revendications 1 à 5, **caractérisée en ce que** le matériau plastique est renforcé par des fibres.

7. Fraise dentaire selon l'une quelconque des revendications 1 à 6, **caractérisée en ce que** la tête (2) présente un contour à forme ronde ou un contour en forme de poire.

8. Fraise dentaire selon l'une quelconque des revendications 1 à 7, **caractérisée en ce que** l'ensemble de la fraise dentaire est fabriqué en un seul tenant et à partir du même matériau.
